Europäisches Patentamt

European Patent Office

Office européen des brevets

(11) Publication number: 0 314 378
A1

# EUROPEAN PATENT APPLICATION

(21) Application number: 88309792.5

(22) Date of filing: 19.10.88

(51) Int. Cl.4: **B27K 5/00** , **C09D 3/66** , **C09D 15/00**

(30) Priority: 30.10.87 US 115176

(43) Date of publication of application:
03.05.89 Bulletin 89/18

(84) Designated Contracting States:
AT BE CH DE ES FR GB GR IT LI LU NL SE

(71) Applicant: The Clorox Company
1221 Broadway
Oakland California 94612(US)

(72) Inventor: Adkins, Adrian S.
125 Natalie Drive
Moraga California 94556(US)
Inventor: Englund, Diane J.
18136 N.E. 201st Drive
Woodenville Washington 78072(US)

(74) Representative: Smith, Sydney et al
Elkington and Fife Beacon House 113
Kingsway
London WC2B 6PP(GB)

(54) Alkyd based waterborne deck stain composition and use thereof.

(57) Waterborne penetrating deck stain compositions and method for applying the coating compositions to wood surfaces are disclosed. The coating compositions include a medium-long oil length water-reducible alkyd resin as a single resin component and a solvent component comprising water and propylene glycol tertiary butyl ether (PTB) as a coupling solvent. The deck stain composition also preferably include an alkaline solubilizer for neutralizing the single resin component.

EP 0 314 378 A1

## ALKYD BASED WATERBORNE DECK STAIN COMPOSITION AND USE THEREOF

The present invention relates to coating compositions and methods for coating and protecting wood surfaces and more particularly to a waterborne deck stain composition which penetrates into the wood surface.

Penetrating deck stains have traditionally been formed as oil based systems having inherently good spreading characteristics for facilitating their application to horizontal wood surfaces subject to abrading foot traffic and the like.

Application characteristics for these coatings are well understood in the art and are important to assure uniform, protective and esthetic characteristics in the coated wood. In particular, it is desirable that penetrating coatings or stains be provided with suitable rheological characteristics such as "brush drag" for facilitating uniform spreading of the coating on the wood surface by means of a brush, roller, etc. Other characteristics such as drying rate are also important in achieving coating uniformity on the wood surface while also maintaining necessary protective characteristics of the coating after it dries.

As noted above, these various characteristics can readily be assured in oil based systems. However, more recently, water based or waterborne systems have been given greater consideration for a variety of reasons. As a primary consideration, under the Federal Clean Air Act, Air Pollution Control Districts have established local limits for volatile organic compounds. As an example, a maximum limit of 350 grams per liter of volatile organic compounds (VOC) has been established as a maximum limit, at least in portions of the state of California, for penetrating coatings of the type toward which the present invention is directed. In effect, these statutory regulations establish an upper limit for the amount of organic solvents which can be present in such penetrating coatings.

Waterborne coatings or stains have thus become of greater interest as a means for meeting the statutory guidelines. At the same time, waterborne stains provide other desirable advantages which are also common to water based paints and are generally well known, such as ease of clean-up with water and low flammability.

A variety of water based or waterborne coatings are available in the prior art. They commonly employ glycol ethers of a wide variety as a coupling solvent or cosolvent which, together with an alkaline solubilizer or neutralizer, assures solubility of the resin component in the water.

Prior art water based penetrating coatings or stains have also been developed with a variety of resins which are usually of lower molecular weight in order to assure their penetration of wood substrate. Water based penetrating coatings or stains in the prior art commonly include lower molecular weight resins including alkyd resins, modified alkyds and the like which can be solubilized in water with conventional cosolvents such as the glycol ethers (and alkaline solubilizer) referred to above. For example, Vasishth et al, U.S. Patent 4,276,329 disclosed a coating composition for treating and protecting wood surfaces, the composition comprising a low molecular weight alkyd resin in a cosolvent of water and a small amount of glycol ether solvent.

Numerous additional prior art references also have disclosed water based systems. However, such prior art water based systems have generally been incapable of providing equally good application characteristics as the oil based systems referred to above.

Accordingly, there has been found to remain a need for improved penetrating coatings or stain systems. In particular, there has been found to remain a need for a waterborne deck stain which is semi-transparent or solid color in terms of pigment quantity and which is designed to be relatively fast drying, capable of developing early water resistance and resulting in a durable coating for use on horizontal surfaces normally subject to abrasion from foot traffic and the like. Furthermore, a need has been found for an improved waterborne penetrating deck stain which has application characteristics on wood surfaces similar to application characteristics for oil based products.

### Summary of the Invention

It is therefore an object of the invention to provide a waterborne deck stain composition having improved application characteristics during application to wood surfaces and providing effective protection for the wood surface after application as well as a method of applying such a coating composition.

It is a further object of the invention to provide a waterborne deck stain composition for protecting wood surfaces and also to provide a method for applying such a coating composition, the composition comprising a resin component consisting essentially of a single medium-long oil length water-reducible alkyd resin and a solvent formed from water and propylene glycol tertiary butyl ether (PTB) as a coupling solvent or cosolvent for solubilizing the resin in water and for enhancing application characteristics of the deck stain on wood surfaces.

The deck stain composition summarized above has been found surprisingly effective as a protective coating for wood surfaces, particularly horizontal surfaces subject to abrasive wear, while also providing enhanced application characteristics. The alkyd resin facilitates fast drying characteristics of the deck stain as well as providing early water resistance after its application to a wood surface.

The solvent component is formed with propylene glycol tertiary butyl ether or PTB as a coupling solvent or cosolvent in order to more effectively solubilize the resin in water and at the same time to enhance application characteristics of the coating composition.

Preferably, the alkyd resin forms about 10 to 25 wgt. % of the coating composition, more preferably about 10 to 20 wgt. % The solvent component preferably forms about 50 to 90 wgt. % of the coating compositions, more preferably about 60 to 85 wgt. % and most preferably about 65 to 80 wgt. % of the coating composition. The PTB cosolvent preferably comprises about 3 to 12 wgt. % of the coating composition, more preferably about 4 to 11 wgt. % and most preferably about 5 to 10 wgt. % of the coating composition. The pigment preferably comprises about 2 to 10 wgt. % of the coating composition, more preferably about 2 to 4 wgt. %, at least for a semi-transparent deck stain. A solid color deck stain could be formed, for example, with the pigment content being increased to about 4 to 8 wgt. % and the alkyd resin to about 15 to 25 wgt. %, more preferably about 15 to 20 wgt. %.

Additional objects and advantages of the invention will be made apparent in the following description of the preferred embodiments and specific examples of the invention.

## Description of the Preferred Embodiments

As summarized above, the present invention is directed toward a waterborne penetrating deck stain formed with a single alkyd resin component selected to provide a protective and esthetically appealing coating for the wood surfaces.

The invention also contemplates a cosolvent system for effectively suspending the resin in a water medium while providing application characteristics equal to or as close as possible to desirable application characteristics inherent in many prior art oil based systems.

Furthermore, the penetrating deck stain of the invention satisfies statutory requirements for volatile organic components (VOC) which in effect provide an upper limit for organic cosolvents employed in the coating compositions. The penetrating coatings are formed with a cosolvent system of water and an organic coupling solvent or cosolvent, specifically propylene glycol tertiary butyl ether (PTB) for solubilizing the alkyd resin in the water medium and for enhancing application characteristics of the deck stain.

In the following description, the development of the penetrating coating system is first summarized followed by a more detailed description of various components of the penetrating deck stain including a single alkyd resin component and solvent component which are of greatest importance. Pigments and other components employed within the penetrating deck stain composition of the invention are also described.

Initially, it was discovered that the use of a single water-soluble alkyd resin as disclosed herein dramatically improved the drying characteristics of the deck stain and also dramatically shortened the time period during which the coated surface remained water sensitive (the coating being susceptible to resolubilization and undesirably washing off of the wood surface).

With the composition of the resin component being based on the single alkyd resin, the solvent system for the deck stain composition was then developed in order to maintain desirable application characteristics referred to above as well as necessary VOC limitations. In the course of developing the solvent system for the invention, many organic cosolvents were tested and evaluated for solubilizing the resin component in water. In particular, many glycol ether solvents were evaluated including solvents based on ethylene glycol, diethylene glycol and propylene glycol. More extensively, glycol ether solvents considered in connection with the invention, and found to be inadequate, included propylene glycol methyl ether, dipropylene glycol methyl ether, tripropylene glycol methyl ether, ethylene glycol methyl ether, ethylene glycol ethyl ether, ethylene glycol butyl ether, diethylene glycol methyl ether, diethylene glycol ethyl ether, diethylene glycol butyl ether, propylene glycol propyl ether and propylene glycol butyl ether. Particular consideration was initially directed toward a solvent system including Butyl Carbitol (diethylene glycol mono-butyl ether) and/or Propasol B (propylene glycol mono-butyl ether).

It was subsequently discovered that a relatively newly available glycol ether, propylene glycol tertiary butyl ether (PTB), was most effective in providing a high level of solution clarity and stability coupled with significantly improved brushing and lapping characteristics. The proportion of PTB employed in the solvent component of the penetrating deck stain was optimized as described below for achieving resin solubilization and application characteristics consistent with the VOC limitations referred to above.

The preferred PTB cosolvent is a "tertiary" glycol ether while the other glycol ethers listed above tend to be "mono" glycol ethers. This distinction in itself was found to be insufficient for explaining the superior performance of PTB in the present invention. For example, another tertiary glycol ether was described in Paul U.S. Patent 4,111,881. That patent disclosed the use of dipropylene glycol, di-tertiary butyl ether as a coalescing agent in the preparation of water based coating compositions. However, the tertiary glycol ether of the Paul patent is believed unsatisfactory, because of its molecular structure or size, for achieving the desired application characteristics while not interfering with other desirable characteristics such as rapid initial drying rates. To further distinguish the present invention from the teaching of the Paul patent, it is noted that the purpose of a coalescing agent is very different from that of a cosolvent. The coalescing agent fuses together latex particles during film formation to form a water insoluble matrix. On the other hand, a cosolvent is essentially water soluble and cooperates with an alkaline neutralizer or solubilizer as described above for solubilizing a resin component within the water medium.

It is of course possible that other cosolvents could be included in the solvent component together with PTB as an essential ingredient, while not exceeding the VOC limits noted above. For example, other cosolvents such as Butyl Carbitol and/or Propasol B could be combined with PTB to form the cosolvent of the present invention as long as a minimum amount of PTB is included in accordance with the discussion above.

The solvent component also preferably includes an alkaline solubilizer or neutralizer, preferably a volatile amine, in order to both neutralize and solubilize the alkyd resin component in the water medium. The amine solubilizer may be any of a wide variety of amine or ammonia compounds as described for example in an article entitled "Coatings Vehicles of Water Dispersed Drying Oils" by Herbert M. Schroeder, presented at the North Dakota State University Fourth Annual Symposium on New Coatings and New Coatings' Raw Materials, June, 1962.

That reference discussed the use of an appropriate coupling solvent being mutually compatible with a water medium and organic or resin components. A variety of coupling solvents were listed and discussed in the article. Accordingly, the Schroeder reference is incorporated herein as though set forth in its entirety.

It would also be possible to employ alkaline neutralizers such as sodium hydroxide or potassium hydroxide. These materials would satisfactorily neutralize the resin component; however, they would not evaporate and would undesirably remain in the coating after its application to the wood surface.

The penetrating deck stain of the invention may also include other conventional components such as pigments, drying agents, surfactants, waxes, etc. generally for providing conventional functions within the coating composition.

The penetrating deck stain of the invention can have a pigment content corresponding to either a semi-transparent or solid color classification.

In any event, it has been found that an effective penetrating deck stain can be formed in accordance with the summary provided above and as described in greater detail below.

As noted above, the resin component comprises a single alkyd resin. The alkyd is water-reducible with a molecular weight preferably in the range of 20,000 to 50,000 and more preferably in the range of about 25,000 to 35,000.

At least two examples of alkyd resins meeting the requirements of the present invention are also commercially available from Cargill under the trade nomenclature "7481" and "7416". For greater accuracy, the alkyd resins are individually referred to by those numerical names at least in Table I which sets forth specifications for the two alkyd resins. The two alkyd resins further identified in Table I are generally interchangeable. However, the 7416 resin has been found to be particularly desirable for use in the deck stain formulations of the invention although the 7481 alkyd resin may also be used in such applications.

TABLE I

| Resin Element Specifications | | |
|---|---|---|
| | Alkyd Resins | |
| | 7481 | 7416 |
| Non-volatile (%wt) | 75.0 ± 2.0 | 80.0 ± 2.0 |
| Acid Value (solids) | 53-58 | 53-58 |
| Color (Gardner) | 11 max. | 8 max. |
| Viscosity (G-H) | Z4 1/2 - Z6 | Z4 - Z6 |
| Weight per gallon (lbs/gal) | 8.5 ± 0.1 | 8.5 ± 0.1 |
| Volatile | PTB | PTB |

An alkyd resin according to the present invention, as characterized by either of the examples in Table I, is a relatively complex, cross-linked structure. The alkyd resin is selected for inclusion within the coating composition to provide initial fast drying characteristics upon application of the coating to a wood surface in order to get the coating "out of tack" more rapidly while also making the coating more water resistant in a minimum time period.

The alkyd resin in the resin component of the invention also lends long-term durability to the applied coating. Generally, product durability is directly proportional to molecular weight of the resin, all other things being equal. Thus, it is desirable to employ as high a molecular weight resin as possible while maintaining other desirable or necessary rheological and application characteristics in the deck stain.

More particularly, although not to be taken as a limiting factor of the invention, the desirable characteristics for the alkyd resin are believed to be based upon its "oil length". The phrase "oil length" is commonly employed to indicate the amount of vegetable oil present in a resin or oil composition and has a direct correlation to molecular structure, viscosity characteristics and durability characteristics. Generally, a "long oil resin" has a higher percentage of vegetable oil which usually provides a more linear structure with less cross-linking. By contrast, short oil lengths are less linear because there is less long-chain vegetable oil, thus a greater opportunity for cross-linking which tends to result in a product more difficult to brush for the same reasons noted above.

Generally, the oil length values for the alkyd resins employed in the present invention range from about 45% to 75%, preferably from about 50% to about 65%.

Variation is possible within the alkyd resin as long as it is selected to have the characteristics referred to above. In particular, it would be possible to replace the alkyd resin with a "modified alkyd" as described, for example, in above noted U.S. Patent 4,276,329 at column 3, line 48 through column 4, line 36. Accordingly, that reference is incorporated herein as though set forth in its entirety for the purpose of defining such modified alkyds. Generally, it is not believed that the use of such modified alkyds would be particularly desirable in the present invention with the possible exception of air-curing acrylics (ACA). In any event, the term "alkyd resin" as employed within the present invention is intended to include equivalents such as those discussed above.

Although the term "single alkyd resin" is used herein to describe the resin component, it is to be understood that the resin component may consist either of one alkyd or a combination of more than one alkyd as long as each of the alkyds meets the requirements set forth herein. Thus, for example, the single alkyd resin could be a combination of the 7481 and 7416 alkyd resins defined in Table I.

The single alkyd resin component normally forms about 5 to 25 wgt. % of the penetrating deck stain, more preferably about 7 to 20 wgt. % and most preferably about 8 to 17 wgt. %.

The Solvent Component

As noted above, the solvent component for the penetrating deck stain of the invention are in large part a water medium in order to satisfy the statutory VOC requirements and also to realize other inherent advantages of waterborne systems such as those noted above.

Thus, the most important characteristic for the solvent component according to the present invention is the selection of an organic coupling solvent or cosolvent which suitably solubilizes the single alkyd resin within the water medium while allowing the resin components to form a protective and esthetically appealing coating as noted above with desired application characteristics.

In general, it is also important to understand that, in deck stains contemplated by the present invention, the alkyd resin is not in solution but rather is a dispersion in water. For that reason, it was necessary to find a cosolvent capable of dispersing or "solubilizing" the alkyd resin within the water medium.

Initially, based on extensive testing, it was determined in connection with the present invention that PTB is a superior cosolvent for solubilizing the resin component of the present invention in a water medium. PTB is employed as about 3 to 12 wgt. % of the total deck stain composition with the remainder of the solvent component being largely water. However, as will be described in greater detail below, other components may also be considered part of the solvent component. More preferably, PTB forms about 4 to 11 wgt. % of the total deck stain composition and most preferably about 5 to 10 wgt. % thereof.

As was also noted above, the present invention was based upon the discovery that the use of PTB as a cosolvent with water inherently improves "spreading rate" or coverage defined as the area of wood coated per unit volume (e.g., sq. ft. per gallon) and other application characteristics which are generally desirable in such coatings. The above percentages of PTB are also selected primarily for achieving solubilization of the single alkyd resin component and superior application characteristics.

With the percentage of PTB thus being established, rheological characteristics of the solvent component and more broadly the coating composition are then adjusted to improve the amount of "brush loading" (or the amount of stain or coating which can be lifted out of the can with a brush). Rheological characteristics include values such as "low shear viscosity" and "high shear viscosity". These characteristics can be measured by various instruments and specified for the final product. Low shear viscosity is preferably adjusted in order to achieve brush loading as noted above. High shear viscosity is preferably adjusted for optimizing brush drag.

In developing the present invention, it was further found that a penetrating deck stain could be developed with other coupling solvents having the same low shear and high shear viscosity characteristics as a coating formulated according to the present invention with PTB. However, it is important to understand that, in accordance with the present invention, PTB is necessary or essential in the penetrating coating or stain in order to achieve the desired spreading and application characteristics discussed above. As also noted above, PTB can be supplemented in coating compositions according to the present invention with other cosolvents, particularly Butyl Carbitol and Propasol B. However, it is important in any event to maintain a minimum amount of PTB as a cosolvent for assuring the desirable application characteristics provided by the present invention. The minimum amounts for PTB cosolvent are set forth above.

Generally, spreading and application characteristics for coatings on wood surfaces are largely subjective. There are of course specific numerical scales for viscosity as noted above but not for various application characteristics. Thus, coatings tend to be rated on these characteristics as being good, fair, poor, etc.

It is possible, however, to approximate or classify application characteristics on the basis of "practical spreading rate" which can be numerically measured for different formulations. In effect, the practical spreading rate measures the amount of deck stain required for covering a given surface area under practical and similar conditions. However, it has also been found that in conducting spreading rate tests with large numbers of people, even people who are substantially experienced in stain application, there are widely varying differences in technique, etc. Thus, the numerical measurement of spreading rate as noted above is about the only realistic indication for application characteristics. Spreading rate data should also be averaged for a relatively large number of applicators or at least for expert applicators in order to be reliable. With these limitations in mind, it is believed that spreading rate data can, at least to some degree, exhibit a correlation with desirable application characteristics as noted above.

Further in connection with the question of solubilization of alkyd resins within the solvent component, there is an indication that the degree of solubilization can possibly be correlated with solution clarity or isotropic characteristics of the resulting deck stain formulation. However, it has also been discovered in connection with the present invention that it is possible to get good solution clarity with other glycol ether solvents even though those other solvents do not provide similar desirable application characteristics as achieved with PTB in terms of the present invention.

It is noted again that the single alkyd resin component and the solvent component of a coating composition are the two most important components in connection with the present invention. Generally, the relative amounts of these two components can also be adjusted depending upon the particular product to be formed. Broadly, a penetrating deck stain composition according to the present invention has about 10 to 25 wgt. % of a resin component and about 50 to 90 wgt. % of a solvent component, those components being otherwise defined as set forth above.

Pigment Component

A pigment component can be included within the penetrating deck stain composition of the present invention, the pigment component itself being generally in accordance with the prior art. Various types of pigments can thus be employed depending upon desired coloration and specific application. Otherwise, a specific discussion of pigments is not considered of particular concern in connection with the present invention.

Other Components

The most important additional component, as was also noted above, is an alkaline or preferably amine solubilizer as discussed above comprising any of a broad variety of amines or ammonia compounds, noting again the incorporation by reference of the Schroeder article. Even though the use of such amine solubilizers is well known in the prior art, its inclusion within a deck stain composition of the present invention has been found to provide superior results both in terms of coating characteristics provided by the resins and also application characteristics, possibly due to enhanced solubilization of the resins because of the amine solubilizer being present.

Miscellaneous Components

Still other conventional components may be included in the deck stain composition, with the specific identity, amounts and purposes for those components being substantially similar to other prior art coatings. For example, the penetrating deck stain composition of the present invention may also include surfactants, dispersants, defoamers, driers, antioxidants, water repellants, mildewcides and wood preservatives.

The present invention is further illustrated and exemplified by experimental work including the following example.

EXAMPLE

This example illustrates a typical penetrating deck stain composition having a pigment content which may be characterized as semi-transparent.

| WATERBORNE SEMI-TRANSPARENT DECK STAIN | |
|---|---|
| Raw Material | Percent By Weight |
| Water | 70.2 |
| Propylene Glycol t-Butyl Ether (PTB) | 8.3 |
| Single Alkyd Resin (High Molecular Weight W/R Alkyd Resin) | 15.5 |
| Pigment | 2.0 |
| Ammonia | 1.2 |
| Additives* | 2.8 |
| | 100.0 |

*Includes preservative, anti-foam, water-repellant, mildewcide, wood preservative and drier.

The formulation of the example was also found to exhibit superior application characteristics generally similar to prior art oil based stains while providing a coating exhibiting early drying and water resistance and also providing a durable coating with coloration on the wood surface.

The example illustrates the basic types of clear sealants and stain products which can be formed in accordance with the present invention. However, variations in different components or elements of the coating compositions are possible in accordance with the present invention. For example, the example could be repeated with variations including different amounts of PTB as set forth above and also

7

replacement of a portion of the PTB with one or more different cosolvents, particularly Butyl Carbitol and Propasol B. It is of course apparent that a wide variety of pigment systems could be employed within the formulations of the example and the pigment content could be varied to form a solid color deck stain, for example. It is to be understood that each of these components is also subject to substantial variation depending on the particular formulation. The alkyd resin of the example can be either of the alkyds described in Table I above.

All of the above variations, based either upon actual testing or by comparison with the stated example, are believed to represent formulations which would also provide superior application characteristics generally similar to prior art oil based stains while providing effective coatings for wood surfaces which are fast drying and durable.

The method of the present invention is believed obvious from the preceding description but is briefly described below to assure a complete understanding of the invention.

In use, the formulation from any of the preceding examples or variations is applied to a wood surface to be preserved and/or enhanced by any suitable method such as brushing, rolling, etc. The superior application characteristics of penetrating coatings formulated according to the invention are particularly important in facilitating application to the wood surface and assuring formation of a durable, fast drying and early moisture resistant coating.

Thus, there has been described a novel penetrating deck stain composition and method of application for such a composition to wood surfaces with a number of variations and modifications being set forth descriptively or by way of examples. However, the scope of invention is defined only by the following appended claims.

## Claims

1. A waterborne penetrating deck stain composition for protecting wood surfaces, comprising
a resin component consisting essentially of a single medium-long oil length water-reducible alkyd resin, and
a solvent component comprising water and propylene glycol tertiary butyl ether (PTB) as a coupling solvent for solubilizing the single alkyd resin component in the water and for enhancing handling characteristics of the deck stain composition as it is applied to the wood surface.

2. A deck stain composition as claimed in claim 1 characterised in that the single alkyd resin component forms about 10 to 25 wgt. % of the composition and the solvent component forms about 50 to 90 wgt. % of the composition.

3. A deck stain composition as claimed in claim 1 or claim 2 characterised in that it comprises about 3 to 12, preferably 4 to 11, and most preferably 5 to 10 wgt. % PTB.

4. A deck stain composition as claimed in any of claims 1 to3 characterised in that it includes a pigment component preferably forming about 2 to 10 wgt. % of the composition.

5. A deck stain composition as claimed in any of claims 1 to 4 characterised in that the single alkyd resin has an oil length value of above 45% to 75%, preferably of about 50% to 65%.

6. A deck stain composition as claimed in claim 4 or claim 5 characterised in that it is semi-transparent and includes about 2 to 4 wgt. % pigment and about 10 to 20 wgt. % of the single alkyd resin.

7. A method of coating and protecting horizontal wood surfaces subject to abrasion by contacting them with a penetrating deck stain composition as claimed in any of claims 1 to 6.

8. A method of making a penetrating deck composition as claimed in any of claims 1 to 7, characterised in that the components of composition are formulated together in any desired manner.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | CHEMICAL ABSTRACTS, vol. 105, no. 12, 22nd September 1986, pages 87-88, abstract no. 99166e, Columbus, Ohio, US; R.A. HECKMAN: "Using P-series glycol ethers in water-reducible coatings", & MOD. PAINT COAT. 1986, 76(6),36-42 * Abstract * | 1 | B 27 K    5/00 C 09 D    3/66 C 09 D   15/00 |
| A | EP-A-0 096 207  (ASHLAND OIL, INC) * Page 5, line 21 - page 8, line 28; examples I,II,VI; claims * | 1-8 | |
| D,A | US-A-4 276 329  (R.C. VASISHTH et al.) * Column 3, line 25 - column 5, line 16; examples; claims * | 1-8 | |
| D,A | US-A-4 111 881  (G.A. PAUL) * Whole document * | 1-8 | |
| A | US-A-4 225 477  (R.C. VASISHTH et al.) * Whole document * | 1-8 | TECHNICAL FIELDS SEARCHED (Int. Cl.4) B 27 K C 09 D |

The present search report has been drawn up for all claims

| Place of search | Date of completion of the search | Examiner |
|---|---|---|
| THE HAGUE | 14-02-1989 | FLETCHER A.S. |

EPO FORM 1503 03.82 (P0401)